(19) Europäisches Patentamt / European Patent Office / Office européen des brevets

(11) **EP 3 236 473 B1**

(12) **EUROPEAN PATENT SPECIFICATION**

(45) Date of publication and mention of the grant of the patent:
**04.09.2019 Bulletin 2019/36**

(21) Application number: **15870435.3**

(22) Date of filing: **16.11.2015**

(51) Int Cl.:
*G21C 9/016* *(2006.01)*     *G21C 15/18* *(2006.01)*

(86) International application number:
**PCT/RU2015/000782**

(87) International publication number:
**WO 2016/099327 (23.06.2016 Gazette 2016/25)**

(54) **SYSTEM FOR CONFINING AND COOLING MELT FROM THE CORE OF A NUCLEAR REACTOR**

SYSTEM ZUR EINDÄMMUNG UND KÜHLUNG EINER SCHMELZE AUS DEM KERN EINES KERNREAKTORS

SYSTÈME DE CONFINEMENT ET DE REFROIDISSEMENT DE LA MASSE EN FUSION DE LA ZONE ACTIVE D'UN RÉACTEUR NUCLÉAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.12.2014 RU 2014150936**

(43) Date of publication of application:
**25.10.2017 Bulletin 2017/43**

(73) Proprietor: **Joint Stock Company "Atomenergoproekt"**
**Moscow 105005 (RU)**

(72) Inventors:
• **NEDOREZOV, Andrey Borisovich**
**Podolsk**
**Moskovskaya obl. 142114 (RU)**
• **SIDOROV, Aleksandr Stalevich**
**Moscow 115612 (RU)**

(74) Representative: **Friese Goeden Patentanwälte PartGmbB**
**Widenmayerstraße 49**
**80538 München (DE)**

(56) References cited:
**CN-A- 1 585 034      GB-A- 2 236 210**
**RU-C1- 2 063 071     RU-C1- 2 063 071**
**RU-C1- 2 187 852     RU-U1- 100 326**
**US-A- 4 280 872      US-A- 5 307 390**

## Description

The invention relates to nuclear power industry, namely to systems providing safety of nuclear power plants (NPP) and can be used during severe accidents leading to reactor vessel and its containment failure.

Core meltdown accidents occurring at multiple failures of core cooling systems constitute the highest radiation hazard.

During such accidents, core melt, corium, melts reactor internals and its vessel and flows out of the reactor vessel and, due to its residual heat, can affect the integrity of the NPP containment, the last barrier on the way of radioactive product release to the environment.

To prevent this, the released corium shall be confined and cooled continuously till its complete crystallization. A reactor core melt (corium) cooling and confinement system performs this function, preventing damage to the NPP containment and thus protecting the population and environment from radiation exposure in case of severe accidents in nuclear reactors.

RU 2063071 discloses an emergency core-disruptive cooling system for a nuclear power reactor. This known system has a concrete cavity filled with water in the case of an accident. The cavity is provided with a manhole and houses the reactor vessel and a bottom heat insulation placed under it to form, together with the bottom, heat-transfer channels joined with uptake channels, a central inlet channel, and side inlet channels connected to the latter. All of them, brought together, form a circulating loop for cooling down core melt inside the reactor vessel. Water is filled through the side inlet channels to the central inlet channel wherefrom it is passed to cooling channels for cooling down the core melt through the reactor vessel bottom. Steam produced while cooling goes up via uptake channels above the cavity water level wherein steam is separated. Water goes through the manhole downwards to the concrete cavity bottom. In case of a reactor vessel disruption, melt is passed through the central inlet channel to the middle part of the partition made of light-melting material. Heat bursts throw water out of the side inlet channels and the uptake channels. Melt destructs cords wherefrom shut-off valve plugs are suspended. Plugs go down and additional heat bursts crush them through their plugs, whereupon shut-off valves close and remaining water from side inlet channels will be expelled by steam through anti-shock channels. A Middle part of the partition melts and molten material is discharged to a dry trap. Thermal dampers prevent thermal shock on accumulating container components. After an intermediate accumulating thermal header is heated above an initial temperature of heat pipes, melt heat is imparted to water in an uptake section. Heat transfer is done by water (steam-water mixture) circulation over the following loop: manhole (downtake section), concrete cavity, clearance, uptake section, uptake pipes (uptake section).

A nuclear reactor molten core catcher is disclosed in RU 2187852. The catcher is mounted on supports under a vessel of a nuclear reactor and is made in the form of a spherical bottom container including a heat-insulating protective layer of zirconia and an outer layer of stainless steel, wherein an additional layer of a material chemically binding iron oxides in the melt is arranged on the heat-insulating protective layer. Furthermore, the catcher comprises an additional layer made of neodymium oxide ($Nd_2O_3$).

CN 1585034 discloses an apparatus for positioning and cooling a lining layer of a damaged LWR nuclear reactor. The design of the cooling lining layer catcher comprises a steel basket shell arranged in a sub-reactor, wherein sacrifice material is filled in the steel basket for diluting the component containing uranium and steel component of the lining layer. The thickness of the bottom of the cooling jacket is larger than the thickness of the side wall thereof for no less than 30%, and the cooling jacket inclines to its center for 10 to 20 degrees. The diluent and sacrifice material is made into blocks packed in a steel shell.

According to the background of the invention, there is a nuclear reactor corium confinement and cooling device located in a concrete cavity under the reactor and containing a water-cooled vessel, pellets with a uranium-bearing oxide corium diluent that are bound by cement mortar and placed in horizontal layers of steel blocks, the bottom of the lower block is identical in shape to the vessel bottom, the blocks above have a center hole, and the assemblies attaching the blocks to each other and to the vessel are located in vertical cut slots of the blocks (see Russian Patent No. 2514419 dated 4/27/2014).

The said analog has several disadvantages:

- the bottom of the lower block identical in shape to the vessel bottom has no central hole while blocks above have it, this results in "jamming" of pellets with diluent in the lower block when the first portion of corium containing mostly melted steel and zirconium enters. Considering that the bottom slope angle is between 10 and 20 degrees, the weight of the "jammed" pellets with diluent constitutes 25 to 35% of the total weight of the pellets in the vessel. Next portions of corium containing mostly uranium and zirconium oxides comes after one to three hours after the first portion and cannot provide conditions for thermal chemical reaction with the pellets in the lower block, as the steel delivered earlier will either solidify in the lower block (thus preventing interaction of the pellets with uranium and zirconium oxides) or destroy the steel structure and fasteners of the lower block (then all pellets located inside will float up and form a slag cap above the corium),

- a formula to determine the weight of uranium-bearing oxide corium diluent does not determine the minimum limit of the required weight of diluent correctly due to the incorrect consideration of correlation between the thickness of layers of oxides and metals from the nuclear reactor. The lower limit under this formula shall be increased by 35% in case pellets are jammed in the lower block, and by 15% more in case pellets are blocked by melted steel in the upper blocks before inversion of the oxide and metal layers starts. Thus, the lower limit for calculation of the diluent weight shall be multiplied by a coefficient of 1.5.

- the maximum weight of the residual water in weight percentage in the cement binder for diluent pellets does not exceed 8%, which does not seem correct. According to the results of experiments (see "Investigation of conditions to provide bonding of sacrificial SFAO ceramic with colored mixture brick mortar". Technical information. Ministry of Science and Education of the Russian Federation, State Educational Institution of Higher Professional Training, St. Petersburg State Technological Institute (technical university), 2013, [1]), effective bonding of the pellets providing the design operability requires that weight fraction of chemically bound water shall be 10%, otherwise integrity of pellet setting and their operability will be compromised. A thesis on decrease of water content in the cement binder in order to decrease hydrogen release is incorrect due to the incorrect consideration of steam interaction with porous structure of the pellets setting.

According to the background of the invention, there is a heat exchanger vessel wall structure designed for corium confinement and cooling devices comprising internal and external walls with granulated ceramic filler material that is chemically similar to the sacrificial material, at least 100 mm thick in between (see Russian Utility Model Patent No. 100326, 12/10/2010).

This vessel structure has the following disadvantages:

- granulated ceramic material does not provide effective protection of the heat exchanger vessel external wall from thermal impact induced by high-temperature melt, as this material is an effective heat insulator with thermal conductivity less than 0.5 W/(m K) on average and practically does not transfer heat to the vessel external wall until the end of the melting process, which increases the risk of heat exchanger destruction during convection washing of granulated material by the core melt,
- granulated ceramic material does not provide reliable chemical protection of the heat exchanger vessel external wall, as in case the heat exchanger internal wall is destroyed, this material can pour out from vertical inter-wall space at discharge rate determined by the destruction area, such process will empty the inter-wall space and leave the external wall without the required chemical and thermal protection, thus increasing the risk of heat exchanger destruction,
- large (at least 100 m) width of the gap between the external and internal walls of the heat exchanger during melting of the granulated ceramic material (containing iron and aluminum oxides) results in significant redistribution of heat flows, the main heat flow passes not through the external wall of the heat exchanger vessel, but through the unprotected free surface of the melt mirror increasing average corium temperature in the heat exchanger, thus causing the following processes: increased aerosol generation, high release of non-condensing gases, increased thermal emission, additional heating and destruction of the equipment located above, and, as a result, corium flowing out of the cooled area leading to destruction of the heat exchanger.

That is why application of granulated ceramic backfills without a strong heat conducting connection with the heat exchanger external wall is ineffective.
The purpose of this invention is to eliminate the deficiencies of similar inventions.
The technical result of the invention involves increased efficiency of heat removal from melt and improved structural reliability.
The said technical result is achieved owing to the fact that the water-cooled water-moderated nuclear reactor core melt cooling and confinement system contains a cone-shaped guide plate installed under the vessel bottom, a cantilever girder installed under the guide plate and supporting the same, a core catcher installed under the cantilever girder and equipped with a cooled cladding in the form of a multi-layer vessel for protection of the external heat-exchange wall from dynamic, thermal and chemical impacts, and filling material for melt dilution inside the multi-layer vessel, wherein the said multi-layer vessel of the catcher contains external and internal metal walls with a filler in between having smaller heat-conductivity than that of the wall material, where the filler thickness $h_{fil}$ meets the following requirements: $0.8h_{ext} < h_{fil} < 1.6h_{ext}$, where hext is vessel external wall thickness.
The above technical result is achieved in specific options of the invention owing to the fact that:

- internal and external walls are made of steel,
- the multi-layer vessel filler with 800-1400 °C fusion point is used in the system,
- concrete or ceramic backfill layer with a steady heat exchange with the external wall is used as the multi-layer vessel filler,
- bearing ribs are located between the internal and external walls, wherein rib thickness ($h_{rib}$) meets the following criterion: $0.5h_{ext} < h_{rib} < h_{ext}$.
- bearing ribs pass through the internal wall into the vessel interior volume forming a protective supporting structure,
- the upper part of the vessel is equipped with a flange, its inner and outer diameters correspond to those of the vessel internal and external walls accordingly,
- the system contains an additional artificial slag layer between the external wall and the filler of the multi-layer vessel, the slag layer is based on at least one of the following oxides: zirconium oxide, aluminum oxide, ferric oxide, with mass content of the base in the layer not less than 20 wt.%.

Compared to the analogs, the system under consideration includes a core catcher with a three-layer cladding with external (outer) and internal metal walls and a poorly heat-conductive multi-layer vessel filler with a thickness meeting the following criterion:

$$0.8h_{ext} < h_{fil} < 1.6h_{ext},$$

The said parameter correlation provides effective heat removal from the corium without impact on the external wall integrity due to the following.

On the one hand, the thickness of the poorly heat-conductive multi-layer vessel filler shall not be less than $0.8\ h_{ext}$, as otherwise in case of a thermal shock the filler will not be able to perform its functions and will not guarantee the integrity of the external heat-exchange wall.

On the other hand, the thickness of the poorly heat-conductive multi-layer vessel filler shall not be more than $1.6\ h_{ext}$, as otherwise it may lead to full blocking of the heat exchange through the external heat-exchange wall for more than 1 hour, which is unacceptable based on thermophysical requirements (corium and radiation temperature, increased aerosols formation, etc.).

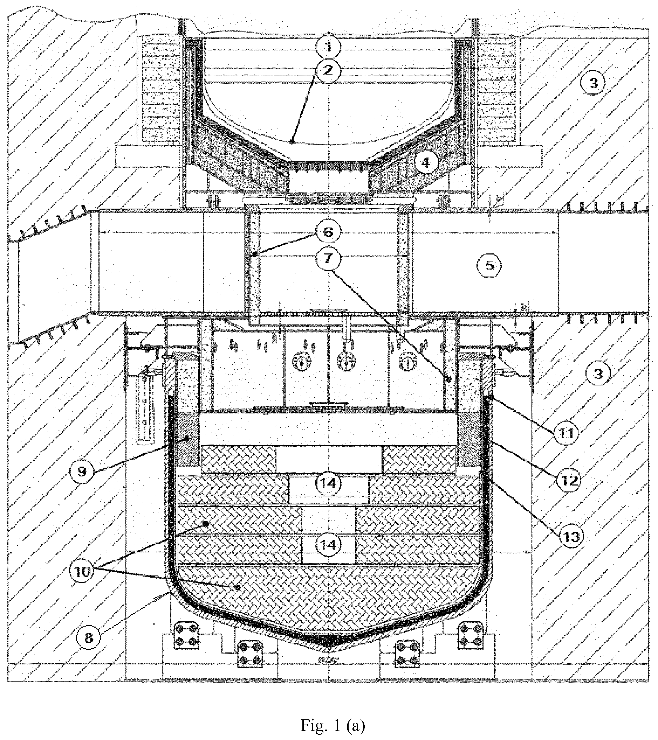

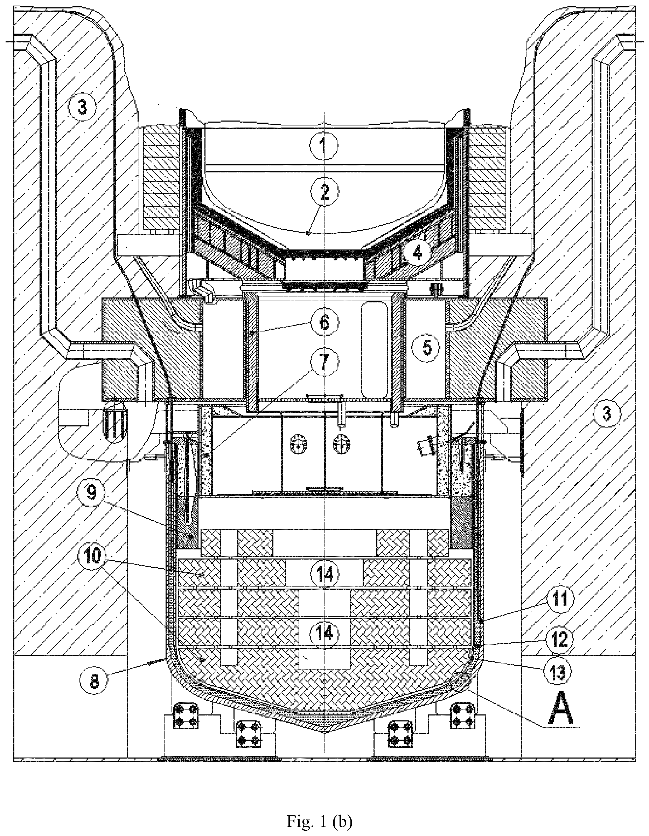

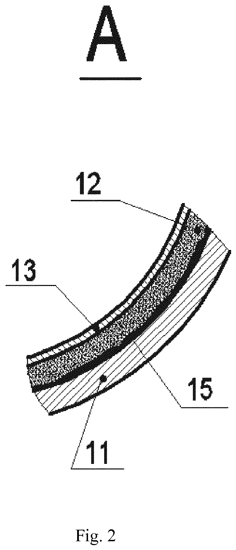

The invention is illustrated with drawings, where: Figures 1 (a, b) show the schematic design of the confinement system, and Figure 2 shows the design of catcher multi-layer vessel.

Designation of structural elements:

    1 - reactor vessel,
    2 - reactor vessel bottom,
    3 - concrete vault (reactor cavity),
    4 - guide plate,
    5 - cantilever girder,
    6 - cantilever girder thermal protection,
    7 - operating floor,
    8 - core catcher,
    9 - thermal protection of multi-layer vessel flange,
    10 - filling material,
    11 - multi-layer vessel outer layer,
    12 - multi-layer vessel filler,
    13 - multi-layer vessel inner layer,
    14 - graded tapered or cylindrical sump for corium,
    15 - slag layer.

According to the claimed invention, a cone-shaped guide plate (4) supported by a cantilever girder (5) with thermal protection (6) is installed under the bottom (2) of the reactor vessel (1) located in a concrete vault (3). Under the cantilever girder (5), there is a core catcher (8) with a cooled cladding (vessel) in the form of a multi-layer vessel containing an external (11) and an internal (13) metal layers (walls) with a poorly heat-conductive multi-layer vessel filler (12) in between.

Inside the core catcher (8) there is a sacrificial filling material (10) applied to dilute corium. In addition, the filling material (10) is equipped with a graded, tapered or cylindrical sump (14) for corium accommodation.

Besides, the core catcher vessel (8) is provided with thermal protection (9) of a multi-layer vessel flange.

An operating floor (7) is located in the space between the cantilever girder (5) and the catcher (8).

The guide plate (4) is designed to guide the corium (core melt) after reactor vessel destruction or melt-through into the catcher (8). In addition, the guide plate (4) prevents large fragments of vessel internals, fuel assemblies and reactor vessel bottom from falling into the catcher and protects the cantilever girder (5) and its communication lines in case of corium from the reactor vessel (1) coming into the catcher (8). The guide plate (4) also protects the concrete vault (3) from direct contact with core melt. The guide plate (4) is divided by strength ribs into sections for core melt flowdown. The strength ribs restrain the reactor vessel bottom (2) with the melt preventing the bottom from covering bores of the guide plate (4) sections and blocking the melt flowdown in case of its destruction or severe plastic deformation. Under the surface of the guide plate cone, there are two layers of concrete: a layer of sacrificial concrete (iron and aluminum oxide base) directly under the surface, and a layer of thermostable heat resistant concrete (aluminum oxide base) under the sacrificial concrete. As the sacrificial concrete is being diluted inn the melt, it increases the clear area in the guide plate sections in case of blocking (when the corium is solidified in one or several sectors), which allows to prevent overheating and destruction of strength ribs, i.e. complete blocking of the clear area and, subsequently, the destruction of the guide plate. Thermostable heat resistant concrete provides structure strength when the sacrificial concrete thickness is decreased. This concrete protects the underlaying equipment from the corium impact preventing the latter from melting or destructing the guide plate (4).

The cantilever girder (5) protects not only the catcher (8), but also the internal communication lines of the whole corium confinement and cooling system from destruction by corium and serves as a support for the guide plate (4) that transfers statistical and dynamic impacts to the cantilever girder (5) fastened in the reactor vessel (3). The cantilever girder (5) also ensures operability of the guide plate (4) in case of its sectional destruction when bearing capacity of the ribs is compromised.

The cantilever girder (5) comprises:

- cover pipes connecting instrumentation and control (I&C) sensors,
- corium spray lines (a header with distribution pipelines) connecting the cooling water supply from external sources, the cooling water is supplied by the spray lines to be sprayed on the corium from the cantilever girder above,
- steam removal lines removing steam from the concrete vault (3) under the reactor to the pressurized area when the corium is cooled in the core catcher (8), the lines remove saturated steam without exceeding the allowable pressure in the concrete vault (3),
- air supply lines supplying air for guide plate (4) cooling during normal operation.

The catcher (8) confines and cools the core melt under the reactor in the reactor cavity (3) in case of reactor vessel (1) melt-through or destruction by means of an evolved heat-exchange surface and heat transfer to large volumes of boiling water. The catcher (8) is installed in the reactor cavity (3) foundation on embedded parts.

According to the claimed invention, the catcher (8) cladding is a multi-layer vessel that comprises:

- external metal layer (11) (external wall),
- layer of a filler (12) of poorly heat-conductive material in relation to the walls materials, that is a material with lower heat conductivity than that of the walls,
- internal metal layer (13) (internal wall),

The external layer (11) can be made of steel, such as grade 22K, 20K, 25L, 20L, with wall thickness of 10-90 mm and bottom thickness of 70-120 mm.

The internal layer (13) can be made of steel, such as grade 22K, 20K, 25L, 20L, 09G2S, steel 20, with wall thickness 5-50 mm and bottom thickness of 20-60 mm.

The layer of the filler (12) is made of a material with fusion point from 800 to 1400 °C, the maximum fusion point is equal to the fusion point of the steel used in the internal layer (13). The filler may be made of concrete or ceramic chips (backfill) exchanging heat with the external layer of the catcher (8) multi-layer vessel (11) with ferric oxides as its main component. To ensure heat conductivity ceramic chips shall include at least two components: high-melting and low-melting. Low-melting component ensures heat conductivity with the external layer of the multi-layer vessel (11).

The thickness of the filler (12) $h_{fil}$ shall meet the following criterion: $0.8h_{ext} < h_{fil} < 1.6h_{ext}$, where $h_{ext}$ is vessel external wall thickness. The lower value is used for cast fillers with porosity from 5 to 10%, and the higher value is used for bulk filler with porosity up to 40%: In particular, the filler layer thickness can be $h_{fil} = 10-100$ mm.

The upper part of the catcher (8) multi-layer vessel is equipped with a flange, its inner and outer diameters correspond to those of the vessel internal and external walls accordingly.

The catcher (8) multi-layer vessel (11) external layer may additionally contain a slag layer (15) located between the layer of the filler (12) and the external layer (11) of the catcher (8) (see Fig. 3). The slag layer (15) can be both pre-formed or formed in the process of corium cooling. Depending on the heat exchange and thermo-chemical conditions, the layer thickness varies from 0.1 to 5 mm during the initial stage of corium cooling, then, as the corium is cooled down, the slag crust thickness can increase significantly. The slag layer is made of at least one of the following oxides: zirconium oxide, aluminum oxide, ferric oxide, provided that the minimum base content of the layer is 20 wt.%.

Besides, the catcher (8) multi-layer vessel can have additional strength ribs located between the external and internal walls.

Bearing rib thickness $h_{rib}$ shall meet the following criterion: $0.5h_{ext} < h_{rib} < h_{ext}$, wherein the lower value assumed for internal wall thickness to be less than $0.5h_{ext}$, and the higher one otherwise:

- the lower value cannot be less than $0.5\ h_{ext}$ due to thermo-mechanical instability of the ribs (severe structural deformation occurs under dynamic impact even with the filler),
- the higher value cannot exceed $h_{ext}$ due to failure of heat removal from the multi-layer vessel external layer (11): the heat-exchange surface is overheated and melt-through.

Bearing ribs can pass through the internal layer of the multi-layer vessel (13) into the internal cavity of the catcher (8) forming a protective frame.

**Example of a multi-layer** vessel **design:**

- diameter: 6 m,
- external layer: a wall of 22K steel, 60 mm thick, and the bottom of 25K steel, 90 mm thick,
- internal layer: a wall of 22K steel, 20 mm thick, and the bottom of 22K steel, 30 mm thick,
- filler layer: ceramic chips based on ferric oxide, 60 mm thick,
- slag layer: a mixture of iron, aluminum and zirconium oxides, 0.5 mm thick,
- bearing ribs: 22K steel, 40 mm thick.

The filling material (10) provides volumetric distribution of corium within the core catcher (8). Is designed for corium oxidization and dissolution to reduce the volumetric energy release and increase the heat-exchange surface between the energy-emitting corium and the multi-layer vessel external layer (11), as well contributing to creation of conditions for fuel-containing corium fractions to float above the steel layer. The filling material can be made of steel and oxide components containing iron, aluminum and zirconium oxides, with channels for corium distribution not only in the cylinder part, but in bottom cone cavity as well.

The operating floor (7) provides heat protection of the catcher (8) top part allowing to perform visual inspection of the reactor vessel (1) during scheduled preventive maintenance by providing access to:

- the filling material for revision and water removal in case of leakage accidents,
- the pressurized assemblies protecting the filling material from leakage accidents,
- the I&C sensor cover pipe end fittings for repairs or sensor replacement.

The claimed system operates as follows:
At the time of vessel (1) destruction, the core melt impacted by hydrostatic and excessive pressures starts to move to the guide plate (4) surface supported by the cantilever girder (5).

As the core flows down through the guide plate (4) sections, it goes inside the multi-layer vessel of the catcher (8) and contacts with the filling material (10).

In case of sectional asymmetric corium flow-down, thermal protections (6) of the cantilever girder (5) and operating floor (7) are starting to melt. Being destroyed, the thermal protections decrease heat impact of the corium on the protected equipment while decreasing temperature and chemical reactivity of the corium itself.

First, the corium fills the sump (14), then, as the other steel structure components of the filling material (10) are melted, it fills the voids between the non-metal components of the filling material (10). The non-metal components of the filler are interconnected with special cement that provides baking of these non-metal components together into a structure preventing the filling material components from floating up in the heavier core melt. As the non-metal components are baked together, the setting has a sufficient strength when the steel fasteners of the filling material lose their strength. Thus, decrease of the steel component strength of the filling material during temperature increase is compensated by increase of the setting non-metal component strength of the filling material during baking. After the steel components of the filling material are melted and dissolved, surface interaction of the filling material non-metal components with core melt components is started. The filling material design, physical and chemical properties are selected to provide maximum efficiency of filling material dissolution in the core melt, prevent corium temperature increase, decrease aerosol generation and radiative heat transfer from the melt mirror, decrease generation of hydrogen and other non-condensing gases. One of the filling material components is ferric oxide with various oxidation degrees which oxidates zirconium, fully oxidates uranium and plutonium dioxides in the course of its interaction with core melt, thus preventing their metal phase, and ensures full oxidation of other corium components, which allows to prevent water steam radiolysis and to block oxygen sorption from the atmosphere over the melt mirror surface. This further leads to a significant reduction of hydrogen emission. Ferric oxide releases oxygen during this process and can deoxidize up to metallic iron inclusive.

Core melt enters the filling material (10) in two stages: during the first stage melted steel and zirconium admixed with oxides pass from the reactor vessel (1) into the filling material (10), and during the second stage it is high-melting liquid oxides admixed with metals that serve as the main component of the melt. Hence, there are two types of core melt interaction with the filling material: 1) metal components of the core melt interact with the filling material components and melt them, as fluid metal zirconium from the core melt is oxidized in the course of boundary interaction with the nonmetallic filling material components that float up after melting and form a layer of light iron and zirconium oxides above the layer of molten metals, 2) oxide components of the core melt interact both with metal structures and nonmetallic filling material components, melt and dissolve them, while zirconium, chrome and some other molten metals included in the oxide fraction of the core melt are oxidized during interaction with the nonmetallic filling material components. Such complicated multistage interaction results in further oxidization of the melt oxide fraction and oxidation of the most active components of the melt metal fraction, generation of corium with preset properties that allow to confine it in a restricted volume and perform its safe and efficient long-term cooling.

Interaction of corium with the filling material results in decrease of the generated corium temperature approximately 1.5 to 2 times, which allows to lower the radiative heat flow from the melt mirror to the cantilever girder, guide plate and reactor vessel bottom above the latter significantly. In order to decrease radiative heat flows from the melt mirror and aerosol generation more effectively, both natural and artificial slag caps are used that are formed both during melting of special-purpose concretes under heat emission from the melt mirror and during fluid corium melt interaction with the filling material. The thickness and life time of the slag cap are selected to minimize the melt mirror impact on the above located equipment in the worst case initial period of corium confinement: during its entry into the filling material and accumulation in core catcher vessel. The time of core melt entry into the core catcher vessel can reach up to several hours, while the oxide phase entry is significantly uneven and can be followed by a considerable change or temporary termination of the flow.

Chemical reactions of the filling material and the core melt gradually change corium composition and structure. At the initial stage, the core melt can change from homogeneous into double-layer structure: generally mixture of molten steel and zirconium on the top with melt of high-melting oxides mixed with metals in the bottom, high-melting oxide melt density is on average 25% higher than the density of molten metal mixture. Gradually, as the filling material is being dissolved in the core melt fluid oxides, the corium composition, particularly its oxide fraction, is changed: the fluid oxide density decrease is more intensive than the change of density of molten metals. This process leads to continuous decrease of density difference between fluid metal and oxide fractions of the corium. The initial weight of nonmetallic sacrificial materials in the filling material is selected so as to guarantee dissolution of nonmetallic sacrificial materials in the core fluid high-melting oxides in such amount that the resultant density of the new oxide melt would be less than the density of the corium molten metal fraction. When fluid oxide density becomes less than the molten metal density, inversion occurs in the corium molten pool: fluid oxides float up, and the corium molten metal fraction goes down. The new corium structure allows to perform safe water cooling of the melt mirror. When fluid oxides come to the surface, cooling water does not create risk of steam explosions due to thermal physical properties of fluid oxides, and does not enter into hydrogen-generating chemical reactions, is not subject to thermal decomposition owing to a relatively low melt mirror temperature. Inversion of fluid oxides and metals allows to provide a steadier heat flow through the core catcher vessel to the ultimate heat sink, water, which is caused by various thermal physical properties of fluid oxides and molten metals.

Heat is transfered from the corium to the catcher (8) in three stages. At the first stage, when mainly molten metals flow into the sump (14) of the filling material (10), heat exchange between the catcher (8) multi-layer vessel (11-13) layers and the melt is not particularly intensive: the heat accumulated by the melt is spent primarily on heating and partial melting of filling material structural components. The catcher (8) lower part is heated evenly and has no significant features. Considering that the catcher (8) cone bottom is on average 30% thicker than its cylindrical part, and vertical convective heat transfer from top downwards is considerably less effective than radial convective heat transfer or vertical convective heat transfer from bottom upwards, the catcher (8) bottom heating process is significantly slower than the subsequent heating of its cylindrical part.

At the second stage, when fluid high-melting oxides dominate, the corium melt level increases significantly (considering dissolution of sacrificial filling materials). The corium oxide fraction is energy-emitting. Energy emission is distributed between the oxide and metal corium fractions in proportion of approximately 9 to 1, which leads the considerable heat flows from the corium oxide fraction. As the density of the corium oxide fraction at the initial stage of interaction with the filling material is significantly higher than the density of molten metal, stratification and redistribution corium components becomes possible: molten metals on the top and high-melting oxides in the bottom. In this condition, when the catcher (8) bottom is not hearted significantly by high-melting oxides because convective heat transfer is directed from top downwards, and heat conductivity of the oxide crust on the "vessel wall/oxides" boundary is insignificant and, on average, does not exceed 1 W/(m K). The oxide crust consisting of molten high-melting oxides (slag line) is formed as a result of oxide melt cooling on the "oxides/metal" boundary, as the metal has a times higher heat conductivity than the oxides and can provide better heat transfer to the ultimate heat sink, water. This effect is used for reliable corium confinement that allows to prevent chemical interaction of the corium components with the external layer of the water-cooled multi-layer vessel (11) and provide its thermal protection. The molten metals above fluid oxides receive energy generally due to convective heat transfer with fluid oxides, the heat transfer direction is from bottom upwards. This condition can lead to overheating of the corium molten metal fraction and significantly uneven distribution of heat flows through the multi-layer vessel layers (11-13) of the catcher (8) to the ultimate heat sink, while increasing heat flow density by radiation from the melt mirror. In the interaction area of the catcher (8) multi-layer vessel (11-13) layers and liquid metal part of the corium, neither slag layer nor natural barriers caused by multi-layer vessel overheating are formed. The task at hand is solved by design provisions.

At the third stage, the corium interacts with the filling material (10) as it comes out on the internal layer of the multi-layer vessel (13). By that time the external layer of the multi-layer vessel (11) on the reactor cavity (3) side is filled with water. The core catcher (8) is installed in the reactor cavity (3) and is connected with the sump collecting reactor plant primary circuit coolant during design and beyond-design basis accidents, and water supplied to the primary circuit from safety systems. To prevent failure of the external layer of the multi-layer vessel (11) transferring heat by high-temperature corium melt, the core catcher (8) is designed as a multi-layer vessel described above. In this case it is possible to distribute thermal and mechanical loads between the layers (11-13) of the multi-layer vessel: the main thermal loads are taken up by the internal layer (13), and the main mechanical loads (impact and pressure) are taken up by the external layer (11). Mechanical loads are transferred from the internal (13) to the external layer (11) by bearing ribs installed on the internal surface of the external layer (11) with the internal layer (13) welded thereto. This design ensures that the internal layer (13) transfers the thermal deformation stress through the ribs to the cooled external layer (11). To minimize thermal stress on the internal layer (13) side the ribs are connected to the external layer (11) with the use of thermal damping.

The multi-layer vessel filler (12) made of poorly heat-conductive material and located between the internal and external layer ensures maintenance of the thermal insulation of the catcher (8) external layer (11) at the initial stage of the core melt ingress. The main purpose of the filler (12) is to protect the external layer (11) of the catcher (8) from thermal impact and to form a slag layer on its internal surface. The corium heats up the internal layer (13) and it melts down, the heat is transferred to the filler (12) which also melts down while being heated up and forms a slag crust on the relatively cold internal surface of the external layer of the multi-layer vessel (11). This process continues until the internal layer (13) and the filler (12) of the multi-layer vessel are fully melted. The filler (12) is rapidly melted and diluted in corium due to low heat conductivity of the filler, hence, heat current from the corium to the internal layer (13) of the multi-layer vessel will be used nearly exclusively to melt the internal layer (13) and the filler (12). The slag layer formed by the filler allows to limit the heat current to the external layer (11) of the multi-layer vessel, redistribute it throughout the height of the external layer (11), and flatten it in relation to local height and azimuth fluctuations (in the centreplane of the multi-layer vessel).

Density limitation of the heat current passing through the external layer (11) of the multi-layer vessel is required to ensure a stable and acritical heat transfer to the ultimate heat sink, i.e. circumambient water of the core catcher (8). Heat is transferred to water in the "pool boiling" mode, which provides for the possibility of passive heat removal for an unlimited period of time. The function of heat current restriction is fulfilled by two components of the nuclear reactor core melt cooling and confinement system.

The first component is the filling material (10), which, on the one hand, provides for dilution and volume increase of heat-producing part of the corium thus allowing to increase the heat exchange area while reducing density of the heat current through the external layer (11) of the core catcher (8), and, on the other hand, provides for inversion of the oxide and metal parts of the corium with the oxide part moving upwards and liquid metal part moving downwards while reducing maximum heat currents to the external layer (11) by redistributing heat currents in the lower part of the core catcher (8). The second component is the multi-layer vessel filler (12) of the multi-layer vessel, which provides for reduction (flattening) of maximum heat currents at the external layer (11) by forming high-melting slag crust that ensures redistribution of maximum heat currents from the corium by height and azimuth of the external layer (11) of the core catcher (8).

Steam produced on the external layer (11) surface goes up and flows through steam relief channels to the containment where it is then condensed. The condensate flows from the containment to the sump connected by flow passages with the reactor cavity (3) where the core catcher (8) is installed. Therefore, in case of long-term cooling of the core catcher cooling water circulation and constant heat removal from the external layer (11) are ensured. Corium in the catcher (8) gradually cools down as the stored heat and the heat of residual energy emissions decrease. At the initial stage of melt cooling after the interaction with filling material (10) is completed, the main heat exchange is carried out through the external layer of the multi-layer vessel (11). After water is supplied into the catcher (8) heat currents gradually flatten: heat current through the external layer (11) becomes equal to the heat current from the corium surface. At the final stage the corium may be cooled down directly by water supplied into the core catcher (8), which is possible if corium forms a water-permeable structure during its solidification.

Thus, the said catcher (8) of the water-cooled water-moderated nuclear reactor core melt cooling and confinement system, as a whole, allows to increase the efficiency of heat removal from the melt while maintaining the integrity of the external layer of the multi-layer vessel (11).

## Claims

1. Water-cooled water-moderated nuclear reactor core melt cooling and confinement system containing:

   a cone-shaped guide plate (4) being adapted to be installed under a reactor vessel bottom (2), a cantilever girder (5) installed under the guide plate (4) and supporting the same, a core catcher (8) installed under the cantilever girder (5) and equipped with cooled cladding in form of a multi-layer vessel for protection of the external heat-exchange wall from dynamic, thermal and chemical impacts, and a filling material (10) for melt dilution inside the multi-layer vessel, wherein the multi-layer vessel contains external (11) and internal (13) metal walls with a filler (12) in between having smaller heat-conductivity than that of the wall material, where the thickness $h_{fil}$ of the filler (12) meets the following requirement:

   $$0.8h_{ext} < h_{fil} < 1.6h_{ext},$$

   where $h_{ext}$ is the thickness of the vessel external wall (11).

2. A system according to claim 1, wherein the internal (13) and external (11) walls are made of steel.

3. A system according to claim 1, wherein the filler (12) with 800 to 1400 °C fusion point is used.

4. A system according to claim 1, wherein concrete layer or ceramic material with a steady heat exchange with the external wall (11) of the multi-layer vessel is used as the filler (12).

5. A system according to claim 1, wherein bearing ribs are located between the internal (13) and external (11) walls, and the rib thickness ($h_{rib}$) meets the following criterion:

$$0.5h_{ext}< h_{rib}<h_{ext}$$

6. A system according to claim 5, wherein bearing ribs pass through the internal wall (13) into the vessel interior volume forming a protective supporting structure.

7. A system according to claim 1, wherein the upper part of the multi-layer vessel is equipped with a flange, its inner and outer diameters correspond to those of the vessel internal (13) and external (11) walls accordingly.

8. A system according to claim 1, wherein an additional artificial slag layer is installed between the external wall (11) and the filler (12) of the vessel, the slag layer is based on at least one of the following oxides: zirconium oxide, aluminum oxide, ferric oxide, with mass content of the base in the layer not less than 20 wt.%.

**Patentansprüche**

1. Wassergekühltes, wassermoderiertes Kernreaktor-Kernschmelzekühl- und -eindämmungssystem, enthaltend:

   eine kegelförmige Führungsplatte (4), die zum Einbau unter einem Reaktorbehälterboden (2) geeignet ist,
   einen Kragträger (5), der unter der Führungsplatte (4) installiert ist und diese trägt,
   einen Kernfänger (8), der unter dem Kragträger (5) installiert und mit einer gekühlten Verkleidung in Form eines mehrschichtigen Behälters zum Schutz der äußeren Wärmeaustauschwand vor dynamischen, thermischen und chemischen Einflüssen ausgestattet ist,
   und ein Füllmaterial (10) zur Schmelzverdünnung im Inneren des mehrschichtigen Behälters,
   wobei der mehrschichtige Behälter äußere (11) und innere (13) Metallwände mit einem Füllstoff (12) dazwischen enthält, der eine geringere Wärmeleitfähigkeit als der des Wandmaterials aufweist,
   wobei die Dicke $h_{fil}$ des Füllstoffs (12) die folgende Anforderung erfüllt

$$0,8h_{ext}<h_{fil}<1,6h_{ext},$$

   worin $h_{ext}$ die Dicke der Behälteraußenwand (11) ist.

2. System nach Anspruch 1, wobei die inneren (13) und äußeren Wände (11) aus Stahl hergestellt sind.

3. System nach Anspruch 1, wobei ein Füllstoff (12) mit einem Schmelzpunkt von 800 bis 1400°C verwendet wird.

4. System nach Anspruch 1, wobei als Füllstoff (12) eine Betonschicht oder ein keramisches Material mit einem stetigen Wärmeaustausch mit der äußeren Wand (11) des mehrschichtigen Behälters verwendet wird.

5. System nach Anspruch 1, wobei Auflagerippen zwischen den inneren (13) und äußeren (11) Wänden angeordnet sind und die Rippenstärke ($h_{rib}$) das folgende Kriterium erfüllt:

$$0,5\ h_{ext}<h_{rib}<h_{ext}$$

6. System nach Anspruch 5, wobei Auflagerippen durch die innere Wand (13) in das Behälterinnenvolumen eingeführt werden und eine schützende Tragkonstruktion bilden.

7. System nach Anspruch 1, wobei der obere Teil des mehrschichtigen Behälters mit einem Flansch ausgestattet ist und demgemäß seine Innen- und Außendurchmesser denen der inneren (13) und äußeren (11) Wände entsprechen.

8. System nach Anspruch 1, wobei eine zusätzliche künstliche Schlackenschicht zwischen der äußeren Wand (11) und dem Füllstoff (12) des Behälters installiert ist, wobei die Schlackenschicht auf mindestens einem der folgenden Oxide basiert: Zirkoniumoxid, Aluminiumoxid, Eisenoxid, wobei der Massengehalt der Basis in der Schicht nicht weniger als 20 Gew.-% beträgt.

**Revendications**

1. Système de refroidissement et de confinement pour un corium de réacteur nucléaire en fusion refroidi à l'eau et modéré à l'eau, contenant :

   une plaque guide en forme de cône (4) qui est adaptée à être installée au-dessous d'un fond d'une enceinte de réacteur (2),
une poutre en porte-à-faux (5) installée au-dessous de la plaque guide (4) et supportant celle-ci,
un récupérateur de corium (8) installé au-dessous de la poutre en porte-à-faux (5) et équipé d'un revêtement refroidi sous la forme d'une enceinte multicouche pour la protection de la paroi d'échange de chaleur externe vis-à-vis des impacts dynamiques, thermiques et chimiques, et
un matériau de remplissage (10) pour dilution de fusion à l'intérieur de l'enceinte multicouche,
dans lequel l'enceinte multicouche contient des parois métalliques externe (11) et interne (13) avec un remplissage (12) entre celles-ci, et ayant une conductivité thermique plus faible que celle du matériau des parois,
dans lequel l'épaisseur $h_{fil}$ du remplissage (12) satisfait la condition suivante :

$$0,8\ h_{ext} < h_{fil} < 1,6\ h_{ext},$$

dans laquelle $h_{ext}$ est l'épaisseur de la paroi externe de l'enceinte (11).

2. Système selon la revendication 1, dans lequel la paroi interne (13) et la paroi externe (13) sont faites en acier.

3. Système selon la revendication 1, dans lequel le remplissage (12) utilisé présente un point de fusion de 800 à 1400° C.

4. Système selon la revendication 1, dans lequel une couche de ciment ou un matériau céramique présentant un échange thermique permanent avec la paroi externe (11) de l'enceinte multicouche est utilisé(e) à titre de remplissage (12).

5. Système selon la revendication 1, dans lequel des nervures portantes sont situées entre la paroi interne (13) et la paroi externe (11), et l'épaisseur des nervures ($h_{rib}$) satisfait le critère suivant :

$$0,5\ h_{ext} < h_{rib} < h_{ext}.$$

6. Système selon la revendication 5, dans lequel les nervures portantes passent à travers la paroi interne (13) jusque dans le volume intérieur de l'enceinte en formant une structure de support protectrice.

7. Système selon la revendication 1, dans lequel la partie supérieure de l'enceinte multicouche est équipée d'une bride, son diamètre extérieur et sont diamètre extérieur correspondant à ceux des parois internes (13) et externe (11) de l'enceinte.

8. Système selon la revendication 1, dans lequel une couche de scories artificielles additionnelle est installée entre la paroi externe (11) et le remplissage (12) de l'enceinte, la couche de scories étant basée sur l'un au moins des oxydes suivants : oxyde de zirconium, oxyde d'aluminium, oxyde ferrique, avec une teneur en masse de la base dans la couche qui n'est pas inférieure à 20 % en poids.

Fig. 1 (a)

Fig. 1 (b)

A

12

13

15

11

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2063071
- RU 2187852
- CN 1585034
- RU 2514419
- RU 100326